Europäisches Patentamt

European Patent Office

Office européen des brevets

(19)

(11) EP 1 198 084 A2

(12) EUROPEAN PATENT APPLICATION

(43) Date of publication:
17.04.2002 Bulletin 2002/16

(51) Int Cl.⁷: H04H 1/00, H04L 29/06,
H04L 12/44

(21) Application number: 01124464.7

(22) Date of filing: 11.10.2001

(84) Designated Contracting States:
AT BE CH CY DE DK ES FI FR GB GR IE IT LI LU
MC NL PT SE TR
Designated Extension States:
AL LT LV MK RO SI

(30) Priority: 11.10.2000 JP 2000311293
28.12.2000 JP 2000401663

(71) Applicant: MATSUSHITA ELECTRIC INDUSTRIAL
CO., LTD.
Kadoma-shi, Osaka 571-8501 (JP)

(72) Inventors:
• Sakata, Tsuyoshi
Yokohama-shi, Kanakawa 241-0816 (JP)
• Itoh, Hayashi
Matsudo-shi, Chiba 271-0045 (JP)

(74) Representative: Betten & Resch
Patentanwälte,
Theatinerstrasse 8
80333 München (DE)

(54) **Method and apparatus for controlling the condition of a plurality of terminals comprising a server which is linked to the terminals through a communication line**

(57) A terminal condition controlling method and apparatus capable of operating at a low cost and effectively grasping the conditions of a plurality of terminals. In a communication system comprising a plurality of terminals and a server, the terminals are connected to the server apparatus through a communication line and transmit condition information, and the server apparatus statistically processes the attained condition information to execute the forecasting. In this time, the plurality of terminals have timings of informing the server apparatus of the condition determined for the respective terminals, and the timings for the respective terminals are distributed within a predetermined period. With this constitution, the present invention realizes to use the analysis result of the terminal condition information as data for making the next program or data for deciding whether or not the broadcasting of software should be continued in changing the version of software.

[FIG. 1]

EP 1 198 084 A2

## Description

### FIELD OF THE INVENTION

The present invention relates to a terminal condition controlling method and the apparatus, more specifically, to a terminal condition controlling method capable of operating at a low cost and effectively grasping the conditions of a plurality of terminals, and the apparatus.

### DESCRIPTION OF THE RELATED ART

According to the conventional broadcasting system or the like using communication satellite or broadcasting satellite, a transmitting apparatus (a server apparatus) transmits data such as contents to a receiving apparatus (a terminal) in one direction, and the receiving side listens/watches the contents. In this time, the terminal informs the transmitting apparatus of information indicating its own condition through a communication line such as a telephone line. The information indicating its own condition includes information indicating what program has been viewed by the terminal; viewing history such as viewing time; and/or receiving quality of the program reception, or reception/failure of the data reception. The server apparatus receives the terminal condition apparatus to control the condition of the terminal, and analyzes the attained terminal condition information to utilize it for the broadcasting in filture.

On the other hand, with use of such a transmission/reception system, version-up software (version-up data) is distributed by broadcasting to upgrade or to update the version of software, and the terminal device receives the broadcasted software and replaces the program present therein with the new software. Such a method is beginning to be brought into practice by the BS (Broadcasting Satellite) digital broadcasting, for example.

### SUMMARY OF THE INVENTION

As described above, according to the conventional broadcasting system or the like, the server apparatus installed in a center transmits data such as contents to the terminal in one direction, the terminal views the contents, and the terminal transmits information indicating its own condition to the server apparatus through a communication line in order to inform the condition of the terminal, thereby the server apparatus controls the condition of the terminal. According to such a terminal condition control method, however, the server apparatus cannot grasp the information such as broadcasting of data; whether or not the broadcasting is performed; and which program was viewed, till all of the plurality of terminals joining this broadcasting system transmit condition information. It is difficult to grasp the conditions of a plurality of terminals effectively within a short period of time.

Further, when the version-up data is distributed by broadcasting as mentioned above, data cannot be received with good quality due to bad weather or when the user views another channel, or even may fail to receive data. The version-up data needs to be broadcasted repeatedly in consideration of the failure of the data reception.

As described above, it takes a long time until the center grasps the conditions of all the terminals. In addition, the center cannot grasp enough how many terminals succeed in the updating according to this method. Further, it cannot be precisely determined when the broadcasting of the version-up data should be stopped. In other words, it takes so long time for changing programs in accordance with the taste of the viewers, and the software to be downloaded needs to be continuously broadcasted in changing the version, which has prevented the effective utilization of a transmission path used for the broadcasting and preferable for using to transmit more contents as the capacity permits.

In order to solve the above-mentioned problem, a method of transmitting the own condition of the terminal from the terminal to the server apparatus through a communication line has been proposed. With use of this method, however, the line connection fee is needed, and it is thus preferable to transmit the information by "sharing" (attaining the object using space {gap} e.g. empty bandwidth of the line connected for the other object), if possible. However, also in this method, the information cannot be transmitted every time, and thus the conditions of the terminals cannot be attained in real time.

The present invention is proposed in consideration of the above-mentioned problems, and intended to provide a terminal condition controlling method capable of operating at a low cost and effectively grasping the conditions of a plurality of terminals, and the apparatus.

In order to attain the above-mentioned object, the present invention provides a terminal condition control method comprising a plurality of terminals and a server apparatus controlling conditions of the terminals, and controlling conditions of the terminals, wherein the terminals are connected to the server apparatus through a communication line and transmit information indicating the conditions of the terminals, the server apparatus performs the control of the terminals on the basis of the attained conditions of the terminals, the plurality of terminals have timings (e.g., timing information) for informing the server apparatus of the condition determined for the respective terminals, and the timings for the respective terminals are distributed within a predetermined period.

With this constitution, the present invention realizes to use the analysis result of the terminal condition information as data for making the next program or data for deciding whether or not the broadcasting of software should be continued in changing the version of software.

According to one aspect of the invention, a terminal condition control method comprises a plurality of terminals and a server apparatus controlling conditions of the terminals, and controlling conditions of the terminals, wherein the terminals are connected to the server apparatus through a communication line and transmit information indicating the conditions of the terminals, the server apparatus statistically processes the attained conditions of the terminals to perform forecasting, the plurality of terminals have timings of informing the server apparatus of the condition determined for the respective terminals, and the timings for the respective terminals are distributed within a predetermined period. With this constitution, the present invention realizes to use the analysis result of the terminal condition information as data for making the next program or data for deciding whether or not the broadcasting of software should be continued in changing the version of software, thereby the effective control of the terminals can be attained.

The distribution of the condition informing timings for the plurality of terminals may be set within a month by date assignment. With this method, the condition of all the terminal devices can be grasped within a suitable period of time.

Moreover, the distribution of the condition informing timings for the plurality of terminals can be changed. With this method, more even distribution of the timing can be attained.

Furthermore, in the distribution of the condition informing for the plurality of terminals, the date assignment is performed such that users assigned on the same date as the condition informing timings of the terminals are uniformly distributed in accordance with at least one of items including age, sex, viewing inclination, hobby, occupation, and address (e.g., demographic data). With this method, more accurate condition of the terminals can be attained by dispersing the timings more even.

According to another aspect of the invention, communication means capable of being connected with a plurality of terminals through a communication line; receiving means for receiving condition information from the terminals; terminal information analyzing means for analyzing the received condition information; and communication controlling means for controlling communication operation performed by the communication means, wherein regarding the plurality of terminals, the communication controlling means defines timings of transmitting conditions of the terminals to the server apparatus for the terminals and sets the condition informing timings to be distributed in a predetermined period of time. With this constitution, the present invention realizes to use the analysis result of the terminal condition information as data for making the next program or data for deciding whether or not the broadcasting of software should be continued in changing the version of software, thereby the effective control of the terminals can be attained.

According to another aspect of the invention, a terminal comprises: communication means capable of being connected with a server apparatus through a communication line; and condition information generation means for generating condition information including downloading information of a software about the terminal, wherein the terminal is connected to the server apparatus by the communication line to transmit the condition information to the server apparatus, and the terminal receives instruction from the server apparatus to set its own condition information transmitting timing. With this method, the server apparatus can attain more accurate condition of the terminals by dispersing the condition information transmitting timings more even.

Another server apparatus according to the present invention comprises: a condition information receiving section for receiving from a plurality of terminals condition information indicating conditions of the plurality of terminals; a statistic processing section for statistically processing a plurality of condition information received by the condition information receiving sections; an operation condition maintaining section for maintaining an operation condition as a condition for executing a predetermined operation; an operation controlling section for controlling the predetermined operation; a determining section for determining whether or not the result of the statistic process by the statistic processing section meets the operation condition maintained by the operation condition maintaining section; an operation executing section for taking out the operation controlled by the operation condition controlling section to execute the operation when the operation condition is met in the determining section.

Another terminal according to the present invention comprises a transmitting section for transmitting condition information to be statistically processed by the server apparatus.

## BRIEF DESCRIPTION OF THE DRAWINGS

    **FIG. 1** is a block diagram showing the entire constitution of the broadcasting system according to the first embodiment.

    **FIG. 2** is a block diagram showing one example of the broadcasting system employing terminal condition control method according to the first embodiment.

    FIG. 3 is a table representing that a timing of informing the transmitting device of the condition is determined for each of the receiving devices and the informing timings are distributed within a predetermined period according to the first embodiment.

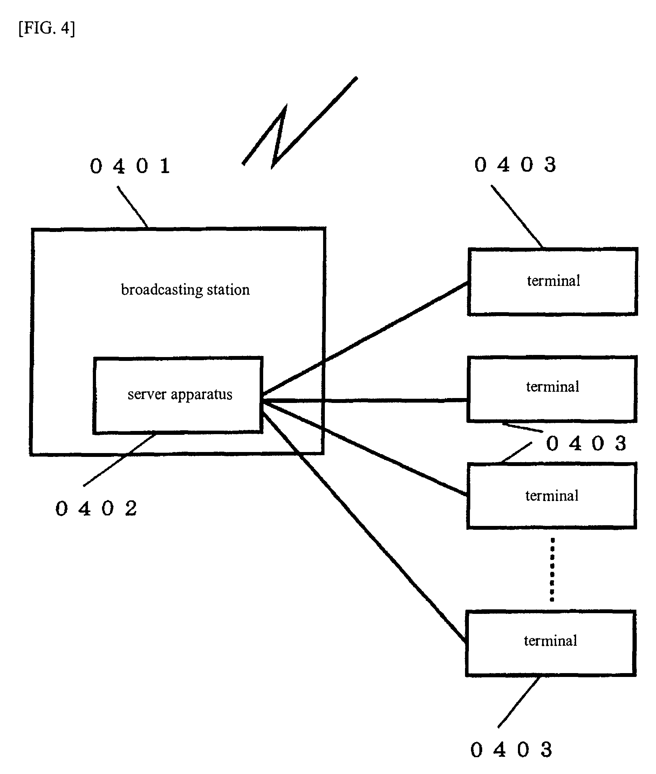

    **FIG. 4** is a block diagram showing the entire constitution of the broadcasting system according to the second embodiment.

**FIG.** 5 is a block diagram showing one example of the server apparatus according to the second embodiment.

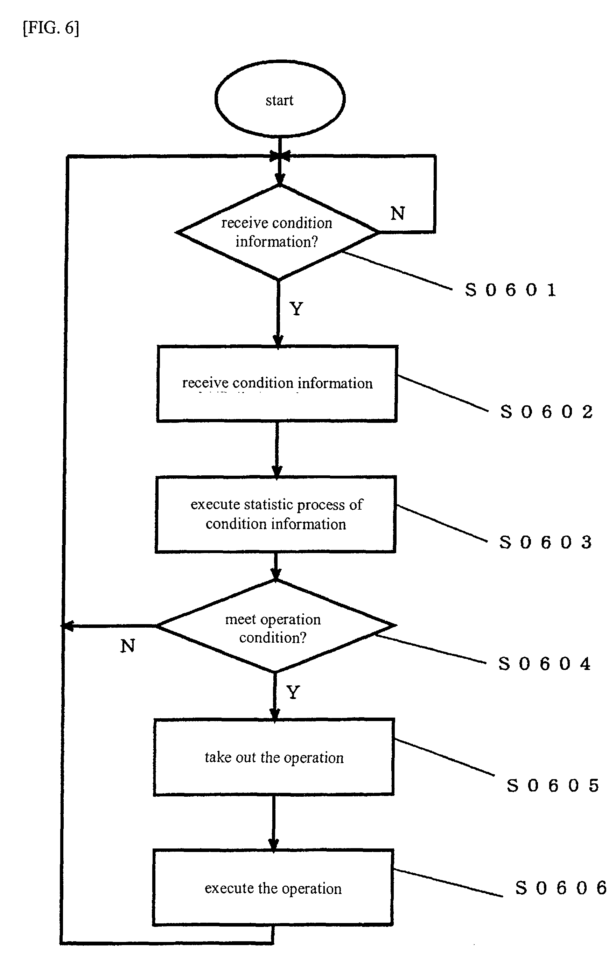

FIG. 6 is a flow chart representing the flow of the process by the server apparatus in **FIG.** 5.

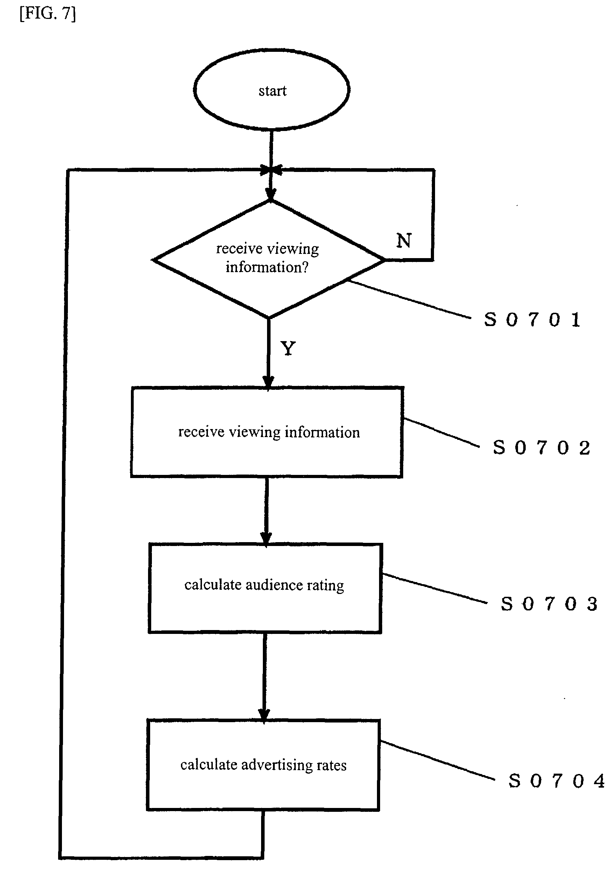

**FIG.** 7 is a flow chart representing the flow of the calculation of the advertising rates based on the audience rating calculated by the statistics processing section according to the second embodiment.

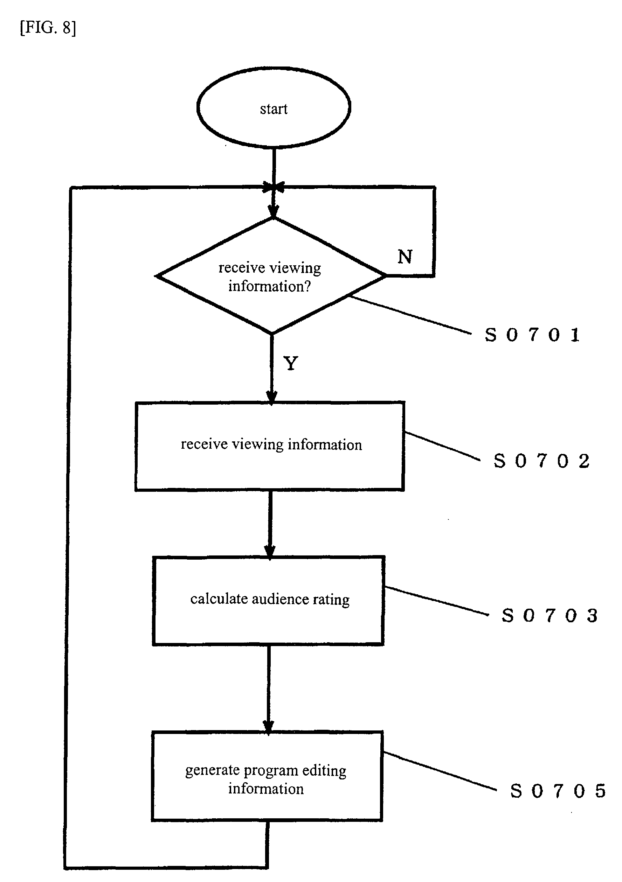

**FIG.** 8 is a flow chart representing the flow of the generation of the program editing information based on the audience rating calculated by the statistics processing section according to the second embodiment.

**FIG.** 9 is a table representing one example of the calculation of the advertising rates corresponding to the classification of the audience rating.

**FIG.** 10 is a table representing one example of the program editing.

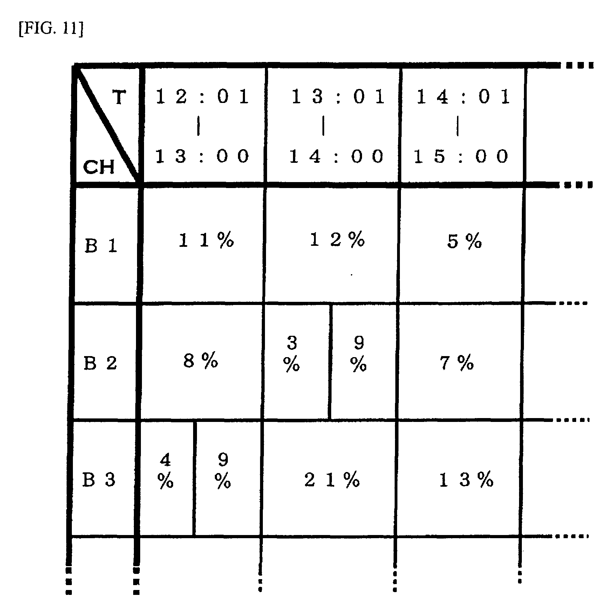

**FIG.** 11 is a table representing one example of the list of the audience rating.

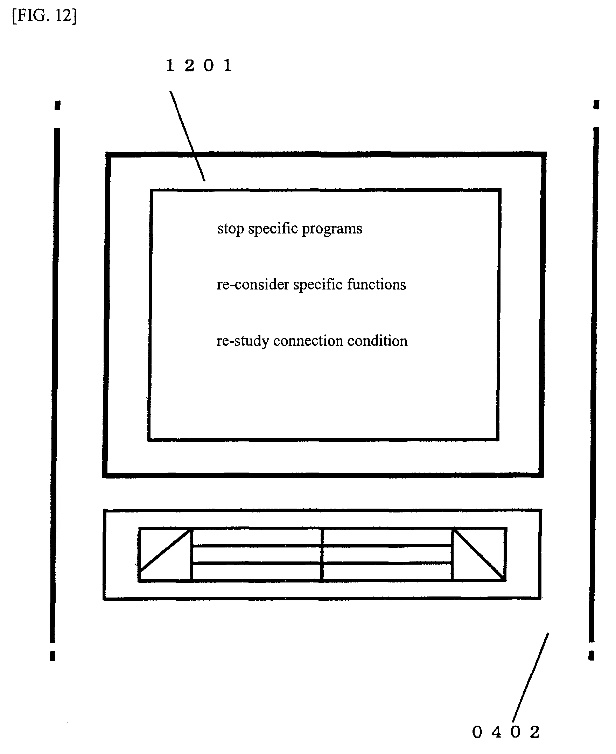

**FIG.** 12 is a table representing one example of the display of the server apparatus.

## DETAILED DESCRIPTION

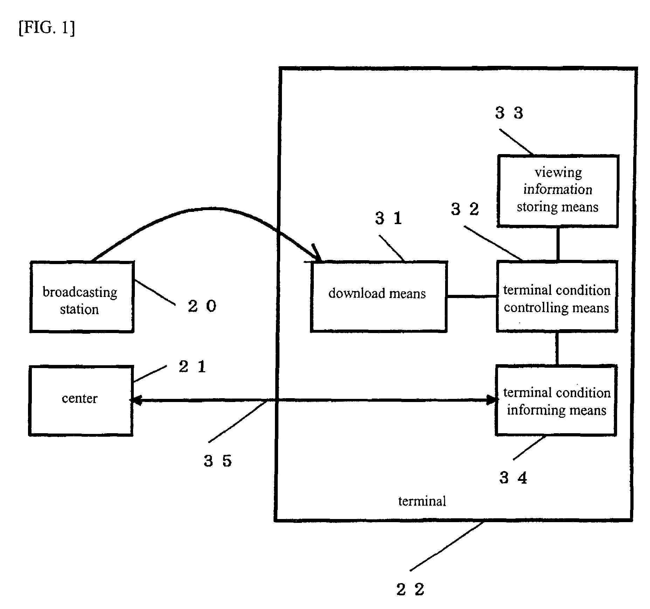

**FIG.** 1 is a block diagram showing the entire constitution of the broadcasting system according to the first embodiment. In this drawing, 20 denotes a broadcasting station for distributing broadcasting data, such as a BS digital broadcasting station, 21 denotes a broadcasting system control center in which the server apparatus is installed, 22 denotes a terminal of a user. The terminal can be any device or apparatus which can receive satellite broadcasting, e.g. a personal computer, a television set or a set top box. There are a plurality of users joining the system, and thus there are a plurality of terminals 22. Each of the terminals 22 has download means 31 for downloading into the terminal 22 the software transmitted from the broadcasting station through broadcasting, terminal condition controlling means 32 for controlling the condition of the terminal 22, viewing information storing means 33 for storing broadcasted and received viewing information, and terminal condition informing means 34 for informing the center of the condition of the terminal. The viewing information can e.g. be information concerning the history of contents viewed, such as information regarding which television shows the viewer as viewed. The terminal condition informing means 34 is connected to the server apparatus of the center 21 through a communication line 35. The "condition" here e.g. means the status of the terminal's software of hardware, for example, the amount of recordable memory vacancy or recorded contents.

In this constitution of the broadcasting system, the broadcasting station 20 and the center 21 may be united (integrated).

According to the above-mentioned broadcasting system, software, i.e., version-up data is transmitted through broadcasting from the broadcasting station 20 to the terminals 22. The download means 31 of the terminal 22 receives the software to execute the download process. After executing the download process, the download means 31 informs the terminal condition controlling means 32 of whether or not the version-up of the software is suitably executed, in order to control the terminal condition. The broadcasting station 20 also broadcasts normal contents other than the version-up data, such as normal TV programs.

On the other hand, the terminal condition informing means 34 collects the information indicating the conditions of the terminals 22 to informs the center 21 of the conditions of the terminals 22. The conditions of the terminals 22 are informed through the communication line 35. The communication line 35 may be any line suitable for an upstream link, such as an upstream telephone link. The center 21 receives the conditions of the terminals 22 and analyzes the information and collects statistics. The timings of informing the condition from the terminals 22 to the center 21 are dispersed between the plurality of the terminals 22 to prevent the concentration of the informing operation. The distribution of the informing timings can be changed by the instruction on the information timing from the center 21 to each of the terminals 22. The information timing instruction can be executed during the response communication operation for informing the condition from the terminals 22 to the center 21. The center 21 collects the conditions of the terminals 22 and sets the next informing timing to be distributed.

Subsequently thereto, the broadcasting station 20 distributes the software through broadcasting, and the center 21 transmits the information timing instruction to the terminals 22 upon receiving the conditions of the terminals from the terminals 22. The abovementioned steps will be repeated thereafter.

FIRST EMBODIMENT

**FIG**. 2 is a block diagram showing an embodiment of the broadcasting system employing the terminal condition control method according to the present invention. The broadcasting system is constituted roughly by a transmitting device 500 as the server apparatus and a receiving device 100 as a terminal.

The transmitting device 500 comprises software storing means 51 for storing the software to be downloaded (such as e.g. software for controlling receiving device 100 or controlling a TV, e.g. for realizing an electric program guidance); software information controlling means 52 for controlling a software controlling table to prepare a software information table from the software controlling table; transmitting means 54 for transmitting various data to be broadcasted; software transmitting means 53 for reading the software to be downloaded from the software storing means 51 and transferring it to the transmitting means 54; contents storing means 59 for storing contents of the program to be broadcasted; and contents transmitting means 60 for reading the contents to be downloaded from the contents storing means 59 and transferring it to the transmitting means 54. The software information controlling means 52 controls the software controlling table to prepare the software information table from the software controlling table, and transmits the software information table to the transmitting means 54. The software information controlling means 52 controls the download list table, and transmits the download list table to the software transmitting means 53 and the transmitting means 54. The software controlling table includes a software name and software information of each of the software downloaded to the receiving device 100. The software information table is prepared for the receiving device 100 so as to recognize the present version of the software in the transmitting device 500. The download list table represents the list of the software enable of being downloaded by the receiving device 100. The download list table includes a software name, a version, and a schedule indicating the date on which the software is broadcasted, the starting time, and the ending time.

The software transmitting means 53 reads the software from the software storing means 51 on the basis of the information written in the download list table transmitted from the software information controlling means 52, and transmits the software to the transmitting means 54. The transmitting means 54 receives the contents from the contents storing means 59 to broadcast it to the receiving device 100 in transmitting the contents, and in downloading the software, broadcasts to the receiving device 100 the software information table and the download list table transmitted from the software information controlling means 52 and the software transmitted from table the software transmitting means 53.

The transmitting device 500 further comprises communication means 55 for performing communication with the receiving device through the communication line; terminal information analyzing means 61 for analyzing the terminal information transmitted from the receiving device 100; terminal controlling means 56 for controlling the terminals on the basis of the analysis result of the terminal information; download results controlling means 58 for controlling whether or not the download succeeded, on the basis of the download results information in the terminal information; viewing history controlling means 62 for controlling viewing history on the basis of the analysis result of the viewing history information in the terminal information; communication controlling means 63 for instructing the receiving device 100 about the condition information transmitting operation upon receiving the condition information of the terminals from the receiving device 100.

The receiving device 100 comprises receiving means 1 for receiving various information such as broadcasted contents or software; software storing means 6 for storing the downloaded software; software controlling means 5 for controlling the software and the software information which are stored in the software storing means 6; software information determining means 2 for determining software information; download determining means 3 for determining whether or not the downloading is enable or not; download executing means 4 for executing the downloading in accordance with the determining result by the download determining means 3; results controlling means 7 for outputting information indicating the failure of the download when the software failed to be downloaded; communication means 8 for transmitting predetermined information from the receiving device to the transmitting device; contents information determining means 9 for determining contents information; contents information executing means 10 for executing the reception of the contents; contents storing means 11 for storing received data such as contents information; contents controlling means 12 for controlling the contents information stored in the contents storing means 11; and viewing history storing means 13 for storing the viewing history of the contents. The receiving device 100 also have condition information generating means 14 for generating its own condition information.

The receiving means 1 transmits the software information table to the software information determining means 2 upon receiving the software information table from the transmitting device 500, upon receiving the download list table, transmits the download list table to the download determining means 3, and upon receiving the software, transmits the software to the download executing means 4. The software information determining means 2 refers the software information table and the software controlling table controlled by the software controlling means 5 of the receiving device 100, and transmits the software information table updated by the software information determining process to the download determining means 3. The download determining means 3 refers the software information table transmitted from the software information determining means 2 and the download list table to execute the download determining process, transmits to the download executing means 4 the entry of the download list table constituted only by the software enable to be downloaded, and transmits to the results controlling means 7 the entry of the download list table constituted only by the software not enable to be downloaded. The download executing means 4 executes the downloading of the software written in the entry of the download list table transmitted from the download determining means 3, and transmits the download result to the software controlling means 5. In the drawing, 200 denotes a display connected to the contents controlling means 12 and the results controlling means 7.

The operation of the terminal condition control apparatus constituted as described above will be described below in detail. The software information controlling means 52 of the transmitting device 500 controls the software controlling table including a software name and software information of each of the software downloaded to the receiving device 100.

The software transmitting means 53 transmits the software information table to the transmitting means 54 such that the receiving device 100 can recognize the present version of the software stored in the transmitting device 500. The software transmitting means 53 reads from the software storing means 51 the software registered in the download list table transmitted from the software information controlling means 52 on the basis of the date written in the schedule contained in the download list table, and transmits the software to the transmitting means 54.

The transmitting means 54 in the transmitting device 500 broadcasts the software information table and the download list transmitted from the software information controlling means 52 and the software transmitted from the software transmitting means 53 to the receiving device 100.

The broadcasting of contents information is performed in the same manner as the above-mentioned broadcasting process of the software. In this case, the contents transmitting means 60 reads contents from the contents storing means 59, and transmits the contents to the transmitting means 54.

The transmitting means 54 of the transmitting device 500 receives the contents from the contents storing means 59 to broadcast it to the receiving device 100. In downloading software, the receiving means 1 of the receiving device 100 receives the software information table, the download list table, and the software broadcasted by the transmitting means 54 of the transmitting device 500. In receiving the software information table, the receiving means 1 transmits the software information table to the software information determining means 2. In receiving the download list table, the receiving means 1 transmits the download list table to the download determining means 3, and in receiving the software, transmits the software to the download executing means 4.

The software controlling means 5 controls the software controlling table including a software name and software information of each of the software stored in the software storing means 6 of the receiving device 100. The software controlling table controlled by the software controlling means 5 should be the same as the software controlling table controlled by the software information controlling means 52 of the transmitting device 500.

The software information determining means 2 refers the software information table transmitted from the receiving means 1 and the software list table controlled by the software controlling means 5, and determines the software necessary to be downloaded.

The download determining means 3 controls the download list table transmitted from the receiving means 1. The download determining means 3 executes the download determining process upon receiving from the software information determining means 2 the determination result of the software necessary to be downloaded. On the basis of the result of the download determining process, the download determining means 3 then transmits the data of the download list table in which the software enable to be downloaded to the download executing means 4, and transmits the data of the download list table in which the software not enable to be downloaded to the results controlling means 7.

Upon receiving the registration data of the software enable to be downloaded from the download determining means 3, the download executing means 4 downloads the corresponding software among the software transmitted from the receiving means 1.

The software controlling means 5 determines whether or not the software corresponding to the software name transmitted from the download executing means 4 is registered in the software controlling table controlled by the software controlling means 5. When the software is registered in the software controlling table, the software is found to be updated (or the version of the software is changed). In this time, the software controlling means 5 updates the version in the software controlling table and corresponding to the software name to the version transmitted from the download executing means 4, and then transmits the software transmitted from the download executing means 4 to the software storing means 6 so as to be stored therein.

On the other hand, when the software is not registered in the software controlling table controlled by the software controlling means 5, the software is found to be newly downloaded. In this time, the software controlling means 5 registers the software, and sets a software name and version transmitted from the download executing means 4 for the registered new software in the software controlling table. At the same time, the software controlling means 5 sends the software transmitted from the download executing means 4 to the software storing means 6 so as to be stored therein.

When the download executing means 4 transmits a software name, version, and a size of the software, the software controlling means 5 adds the software name and the version to the software controlling table since the software controlling table does not have the software name.

The results controlling means 7 receives the data determined to fail in downloading from the download determining means, and registers the software name and the version of the software determined to fail in downloading. The reception of the broadcasting of the contents information will be performed in the same manner as that of the broadcasting of the software. The receiving means 1 of the receiving device 100 performs the reception of contents by receiving contents attribute information and the contents broadcasted by the transmitting means 54 of the transmitting device 500. In receiving the contents attribute information, the receiving means 1 sends the contents attribute information to the contents information determining means 9. In receiving the contents, the receiving means 1 sends the contents to the contents reception executing means 10. Various information such as contents name and the like is controlled by the contents controlling means 12 and the data is stored in the contents storing means 11. When the user views the contents, the viewing record is stored in the contents controlling means 12, and the viewing history is stored in the viewing history storing means 13.

As one of the operations, the receiving device 100 informs its own condition to the transmitting device 500 at regular intervals (a determined date in every month, for example). In order to inform the condition, the condition information generating means 14 receives various information about the receiving device 100 from the software controlling means 5, the results controlling means 7, the contents controlling means 12, and the viewing history storing means 13, and generates condition information of the receiving device 100 (i.e., the terminal). The condition information includes information about what program in the contents is viewed, information on the viewing history, information indicating the quality of the reception, and information on the version of the software. The condition information is sent to the communication means 8, and transmitted to the transmitting device 500 via the communication line.

The condition information transmission method from the receiving device 100 to the transmitting device 500 can be instructed by the transmitting device 500 to the receiving device 100. At first, when the user joins to the broadcasting system and the receiving device 100 is set to receive the broadcasting, a specific date is designated in a month. The receiving device 100 is set to transmit the condition information to the transmitting device 500 at the specified date (timing) in every month. After that, the management such as the change of the specific date is performed during the response operation to the transmission of the condition information from the receiving device 100 at the specific date. For example, when the condition information transmission date is desired to be changed from the 10th originally specified to a specific receiving device (denoted as 100a) to the 20th in every month, the transmitting device 500 issues instructions for changing the transmitting date to the receiving device 100 during the response operation to the next condition information transmission. By issuing the instruction in this manner, the condition information transmission date is executed at the 20th in every month from the next month. The further change of the transmission date is also available.

As described above, the transmitting device 500 sets the transmitting timing of the condition information for the receiving device 100. The following is one example of the setting of the condition information transmitting timing.

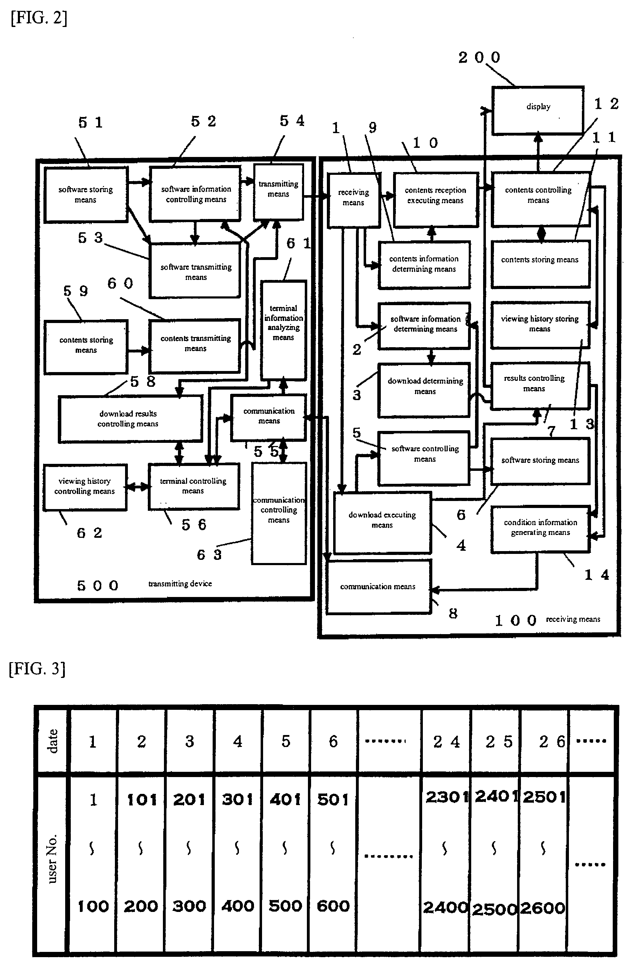

**FIG.** 3, regarding the plurality of the receiving devices, 100 is a table representing that a timing of informing the transmitting device 500 of the condition is determined for each of the receiving devices 100 and the informing timings (transmission date of the condition information) are distributed within a predetermined period. In **FIG.** 3, the dates in the upper row represent dates in every month. The date row has date from the 1st to the 28th. This is because, all the months have the dates from the 1st to the 28th, and the variation of the months in length such as the 31st or the 30th can be avoided thereby. The user No. in the lower row of the table represents the registration Nos. of the users joining the broadcasting system according to the present embodiment. According to the table of **FIG.** 3, the receiving devices 100 of the users of the registration Nos. 1-100 transmit the condition information to the transmitting device 500 on the 1st in every month. The receiving devices 100 of the users of the registration Nos. 101-200 transmit the condition information to the transmitting device 500 on the 2nd in every month. The transmission dates later than the 3rd are also designated in the same manner. The communication controlling means 63 controls the date-user No. list to control the communication by the communicating means 55.

As described above, the timings of informing the condition from the receiving devices 100 are distributed within a predetermined period, and thus the concentration of the condition information transmission on a specific date can be prevented, by which the troubles such as the down of the system due to the overload exceeding the capacity of the communication line can be avoided. According to the terminal condition control method comprising a plurality of terminals and a server apparatus controlling conditions of the terminals, and controlling conditions of the terminals, wherein the terminals are connected to the server apparatus through a communication line and transmit information indicating the conditions of the terminals, the server apparatus statistically processes the attained conditions of the terminals, the plurality of terminals have timing of informing the server apparatus of the condition determined for the respective terminals, and the timings for the respective terminals are determined within a predetermined period, it is convenient that the distribution of the condition informing timings is set within a month by date assignment. The "date assignment" may be performed for year, month, and day, or time may be added to year, month, and day.

On the side of the transmitting device 500, the terminal information analyzing means 61 analyzes for each of the receiving devices 100 from the transmitted condition information such as the viewing history which program is the most popular, whether or not the reception quality is good during the broadcasting, or collects data that a receiving device 100 succeeded in downloading software the version of which is changed, while another receiving device 100 changes the version modification, but failed to download. The transmitting device 500 executes the analysis statistically with arithmetic to forecast. The viewing history information is stored in the viewing history controlling means 62 to be used for calculation audience rating, or the other data.

Further, according to the above-mentioned system, the informing timings for each of the receiving device 100 are distributed within a predetermined period, and thus the total sum of the condition information transmitted on each day is determined, and the analysis of the viewing history and the grasp of success/failure of the download of software can be performed for the limited number of information. In other words, according to the present invention, the total sum of the condition information transmitted on each day is determined, and thus the denominator of the statistic is always given without performing the collection of all the condition information transmitted within one month. The inclination (or tendency such as the success/failure of the download of software) of approximate all the users can be attained from the information collection on only one day (or a few days).

According to the present embodiment, the information timings are determined for each of the receiving devices 100 such that the timings may be suitably distributed within a predetermined period in order to grasp the total trend of the users from a part of data. For example, the date assignment is performed such that users assigned on the same date as the condition informing timings of the receiving devices are uniformly distributed (mixed) as possible in accordance with at least one of items including age, sex, viewing inclination, hobby, occupation, and address. In order to disperse the users in such a manner, the transmitting device 500 sets the condition informing timings of the receiving devices 100 such that the distribution of the condition informing timings can be changed. When the change of the condition informing transmitting date of a receiving device 100 occurs, the relationship between the dates and the groups of the user Nos. indicated in **FIG**. 3 will be changed in accordance therewith, of course.

With this constitution, the present invention realizes to use the analysis result of the terminal condition information as data for making the next program or data for deciding whether or not the broadcasting of software in changing the version of software should be continued or closed, which needs to be continued for several days according to the conventional method. In the above-mentioned embodiment, the date assignment is performed with use of the user No., but may be performed in such ways that the dates are assigned at random or in accordance with at least one of items including age, sex, viewing inclination, hobby, occupation, and address, from the very first time, so as to uniformly disperse the condition informing timings of the receiving devices, as possible as shown in **FIG.** 3.

Among the features of the present invention, the terminal condition information includes the success/ failure of the download of software. With this method, the download result of the broadcasting of the software of new version in modifying the version of the software can be grasped sufficiently during the condition information analysis process with use of only a part of the condition information, effective download determination can be attained without wasting the communication line fee.

## SECOND EMBODIMENT

At first, the entire constitution of the broadcasting system according to the present embodiment will be described below. As shown in **FIG**. 4, a broadcasting station (0401) having a broadcasting apparatus for performing a digital broadcasting or the like is installed with a server apparatus (0402). The server apparatus (0402) is connected to a plurality of terminals (0403) on the user side through a communication line such as a telephone line such that the terminals (0403) on the user side suitably receive digital broadcasting or the like broadcasted by the broadcasting station (0401). On the other hand, the answer from users or various information will be transmitted to the server apparatus (0402) of the broadcasting station (0401) from the terminals (0403) through the communication line.

The server apparatus (0402) needs not to be installed in the broadcasting station (0401), but is sometimes connected to the broadcasting station (0401) through a communication line.

Each of the terminals (0403) has a receiving section for receiving the broadcasting and a transmitting section for transmitting the answer from users or various information as mentioned above to the server apparatus (0402), and corresponds to a home terminal such as a digital TV, set-top box (STB), or the like.

The server apparatus (0402) will be described next in detail. As shown in **FIG**. 5, the server apparatus (0402) comprises a condition information receiving section (0501) for receiving information indicating conditions of the plurality of terminals (0403); a statistic processing section (0502) for statistically processing a plurality of condition information received by the condition information receiving section (0501); an operation condition maintaining section (0503) for maintaining an operation condition as a condition of executing a predetermined operation; an operation controlling section (0504) for controlling the predetermined operation; a determining section (0505) for determining whether or not a result of the statistic process by the statistic processing section (0502) meets the operation condition maintained by the operation condition maintaining section (0503); and an operation executing section (0506) for taking out the operation controlled by the operation condition controlling section (0504) to execute the operation when the operation condition is met in the determining section (0505).

The operation condition maintaining section (0505) and the operation controlling section (0504), the determining section (0505) and the operation executing section (0506) are not essential elements for the server apparatus (0402). For example, in such a case where the condition on which data such as profiles of a plurality of singers appeared in a music program is received by the condition information receiving section (0501) as the condition information of the terminals (0403), collected and processed to be used for the marketing in a music industry in the statistic processing section (0502), these elements may be omitted.

The condition information means all the information concerning the terminals (0403), such as the operation based on the operation performed by the user, the controlling executed in accordance with the operation, or the condition of the terminals (0403) in a network, more specifically, success/failure of the download of the new version software broadcasted from the broadcasting station to the terminals (0403); viewing of a specific program, or not, the viewing time, if viewed; use of a specific function of the terminal (0403), such as recording reservation, electronic program table (EPG), or the like; and connection condition between the server apparatus (0402) and the terminals (0403).

The condition information sometimes includes attribute information such as a local identifier identifying the seat area of the terminals (0403) receiving the broadcasting, a type identifier of the terminals (0403), or a name of a manufacture thereof with the information such as the download.

The condition information receiving section (0501) receives the condition information transmitted from the plurality of terminals (0403) through the communication line. The statistic processing section (0502) collects the same type of condition information received within the same period by the condition information receiving section (0501) to quantitatively grasps the condition information, more specifically, performs the operation as will be described below.

Example 1:

In the case where the condition information is the success/failure of the download in the terminals (0403) when the broadcasting station (0401) broadcasts new version of software to the terminals (0403), the statistic processing section (0502) calculates the success/failure of the download among a plurality of download information received by the condition information receiving section (0501).

The determination of the success/failure of the download may be performed in any method. For example, when the software broadcasted from the broadcasting station (0401) has a size of 65000 bits and the software received by the terminals (0403) has also a size of 65000 bits, the download of the software is determined as a success. While, when the software received by the terminals (0403) has also a size of 64500 bits, the download of the software is determined as a failure.

The determination of the success/failure of the download may be attained in another way. A bit indicating a success of the download is added to the software to be broadcasted from the broadcasting station (0401). When the software downloaded by the terminals (0403) has the bit indicating a success, the download of the software is determined as a success. While, when the software received by the terminals (0403) does not have the bit, the download of the software is determined as a failure.

In still another way, the determination of the success/failure of the download may be attained by actually operating the terminals (0403) in accordance with the instruction signal from the broadcasting station (0401), e.g., after midnight during which the terminals (0403) are not used, in order to simulate whether or not normal operation can be attained by the software downloaded by the terminals (0403).

In the case where the condition information includes the attribute information in addition to the success/failure of the download, the statistic processing section (0502) calculates the success/failure of the download for every attribute. In this case, the success/failure of the download due to topography or climate will be attained from the success rate of every area the terminals (0403) exists. Similarly, the download performance of the terminals (0403) can be also grasped for every type or manufacturer of the terminals (0403) from the success rate of every type or manufacturer of the terminals (0403).

Example 2:

In the case where the condition information has an identifier of the program, and is viewing information indicating that the user viewed a specific program in the terminal (0403), the statistic processing section (0502) calculates the audience rating of the specific program by statistically processing a plurality of viewing information received by the condition information receiving section (0501). More specifically, the condition information receiving section (0501) receives viewing information of a specific program in a specific time zone from a plurality of terminals (0403). Next, the number of the terminals (0403) transmitting the viewing information in the statistic processing section (0502) is divided by the total sum of the terminals (0403) to attain the audience rating.

In this manner, the audience rating of the program broadcasted by the broadcasting station (0401) can be attained.

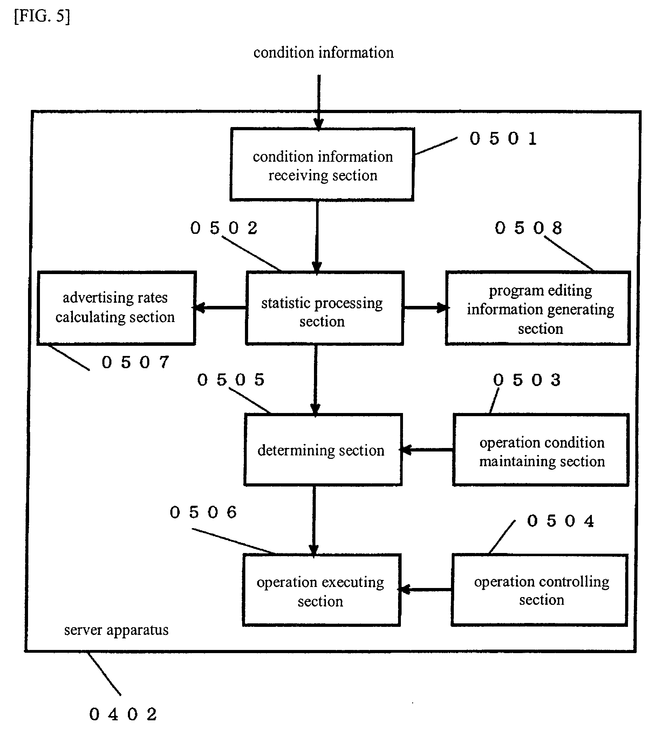

As shown in **FIG.** 5, the server apparatus (0402) of the present embodiment further comprises an advertising rates calculating section (0507) for calculating advertising rates with use of the audience rating calculated by the statistic processing section (0502) as a parameter, and a program editing information generating section (0508) for generating program editing information on the basis of the audience rating.

The advertising rates calculating section (0507) uses a formula, for example, for calculating advertising rates:

$$f(x) = x \times 5,000,000 \text{ JPY}$$

where x is the audience rating.

According to this formula, where the audience rating of 10 % is given, the advertising rates is 0.5 million yens.

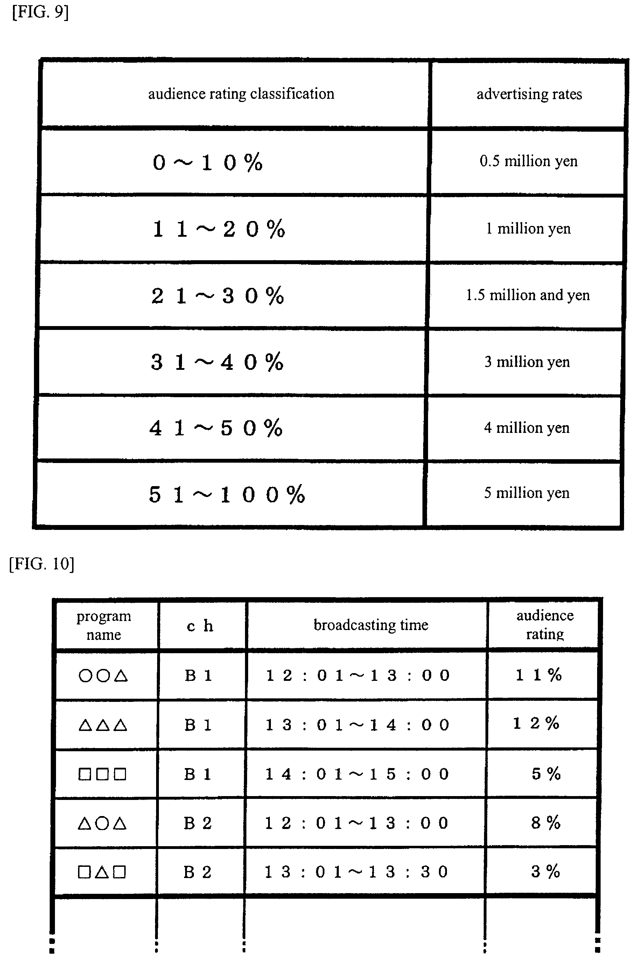

There is another advertising rates calculating method employed by the advertising rates calculating section (0507), wherein the audience rating is classified into some classes, and the advertising rates are determined for every classes to prepare an advertising rates calculating table as shown in **FIG.** 9, and the advertising rates is calculated with reference to the table of **FIG.** 9 on the basis of the audience rating calculated by the statistic processing section (0502). According to this table of **FIG.** 9, where the audience rating of 15 % is given, the advertising rates is 1 million yens.

In this case, the advertising rates calculating section (0507) automatically calculates the advertising rates corresponding to the audience rating for every program broadcasted by the broadcasting station (0401) every time when the statistics are collected.

On the other hand, the program editing based on the audience rating is performed in the program editing information generating section (0508).

To be more specific, the program editing information generating section (0508) controls data such as program names, channels (ch), time zone, and audience rating in a program editing table shown in FIG. 10, and the server apparatus (0402) displays a program audience rating table with the channels and the time zone, as shown in **FIG**. 11. Each of large squares indicates a one-hour program, and each of rectangulars having a half of the size of the squares indicates a thirty-minutes program.

The audience rating for closing programs is set at a predetermined level, 5 % or less, for example. In program editing seasons set several times a year, the audience ratings calculated by the statistic processing section (0502) are displayed on a table of **FIG**. 11, which clearly shows the audience ratings of the programs and specifies program to be closed.

According to the table of **FIG**. 11, the one-hour program at B1 (ch) in 14:01-15:00 and the thirty-minutes programs at B2 (ch) in 13:01-13:30 and at B3 (ch) in 12:01-12:30 are proposed to be closed.

The program editing information generating section (0508) replaces new programs prepared in advance and controlled therein with the programs to be closed. When a one-hour program is to be closed, for example, a new one-hour program is broadcasted in place thereof.

Example 3:

In the case where the condition information has identifiers indicating specific functions such as viewing reservation, recording reservation, double-window, and electronic program table in the terminals (0403), and is function using information indicating that the specific functions are used in the terminals (0403), the statistic processing section (0502) calculates the using rate of the specific function by statistically processing a plurality of function using information received by the condition information receiving section (0501).

The using rate means a using rate calculated by dividing the number of the terminals (0403) that actually used the specific functions during a predetermined period of time by the total sum of the terminals (0403), the cumulative number of all the terminals (0403) that actually used the specific functions during a predetermined period of time, and the frequency or distribution of the use of the terminals in every time zone.

The function using information indicating that the specific functions in the terminals (0403) are received by the condition information receiving section (0501) every time when the specific functions are used or all the uses of the specific functions during a predetermined period are simultaneously received by the condition information receiving section (0501).

In this case, among the terminal (0403) having the plurality of functions, the user can grasp actually how functions use often.

Example 4:

In the case where the condition information has identifiers specifying respective terminals (0403), and is terminal connection information indicating which of the terminals (0403) are connected to the server apparatus (0402), the statistic processing section (0502) calculates the connection condition of the terminals (0403) to the server apparatus (0402) by statistically processing a plurality of function using information received by the condition information receiving section (0501).

In this embodiment, when several % of all the terminals (0403) is recognized to be unsuitably connected to the server apparatus (0402) or when all the terminals (0403) is recognized to be suitably connected to the server apparatus (0402), the connection frequency of the respective terminals can be grasped. Further, by adding a local identifier to the condition information, it can be understood whether the number of the connection by the terminals (0403) in an area is large or small. The grasp of such a connection condition is useful particularly in supplying charged information such as pay-per-view.

In any of the statistic process as described above, the statistic process needs not to be performed on the basis of the condition information about the terminals (0403) connected to the server apparatus (0402). For example, the forecasting of the condition of all the terminals (0403) may be performed on the basis of the statistic result of an arbitrarily extracted part of the terminals (0403).

The operation condition maintaining section (0503) maintains an operation condition as a condition of executing a predetermined operation. For example, when the broadcasting station (0401) broadcasts new software, a predetermined value concerning the success/failure of the download of the new software in the terminals (0403) is maintained as a condition of stopping the broadcasting. More specifically, the values such as more 90 % (90>) of download success rate, or less 10 % (10<) of download failure rate are employed as the condition.

The operation condition maintaining section (0503) further maintains a predetermined value concerning the audience rating of a program is maintained as a condition of stopping the supply of the broadcasting program. In addition thereto, the operation condition maintaining section (0503) maintains a predetermined value concerning specific functions in the terminals (0403) as a condition of re-considering the specific functions, and a predetermined value concerning connection rate of the terminals (0403) to the server apparatus (0402) as a condition of improving the connection condition.

The operation controlling section (0504) controls a predetermined operation as a program or a function. More specifically, the operation controlling section (0504) controls operations such as stopping of the download broadcasting above, the supply of the specific programs, instruction of re-considering of specific functions, instruction of improving of the connection between the terminals (0403) and the server apparatus (0402), and the like.

The determining section (0505) determines whether or not a result of the statistic process by the statistic processing section (0502) meets the operation condition maintained by the operation condition maintaining section (0503). More specifically, the determining section (0505) determines whether or not the software download success/failure rate as the result of the statistic process reaches the value maintained by the operation condition maintaining section (0503) for determining to stop the download broadcasting, whether or not the audience rate of a specific program reaches the value for determining to close the supply of the program, or whether or not the using rate of a specific function or the connection condition of the terminals (0403) reaches the values for determining to improve them.

The operation executing section (0506) takes out operation from the operation controlling section (0504) to finally execute the operation when the determining section (0505) determines that the condition of the execution of the operation is attained. More specifically, the operation executing section (0506) stops the software download broadcasting by applying a trigger directly to the broadcasting station broadcasts the software download broadcasting, closes the supply of the software broadcasting by interrupting the software, or causes the broadcasting apparatus to display the instruction of stopping the download broadcasting. In this manner, the software download broadcasting can be stopped at a suitable time, and thus the broadcasting station (0401) can reduce the broadcasting cost, as a result.

Further, as shown in **FIG**. 12 the operation executing section (0506) causes a display (1201) provided to the server apparatus (0402) show instructions such as "erase a specific program" in the program editing table as shown in **FIG**. 10, "re-consider specific functions", or "re-study connection condition" of the terminals (0403). On the basis of the instruction, the program maker or the designer of the functions of the terminals (0403) studies specific improving measures.

The following is the description of the process flow of the server apparatus (0402). As shown in **FIG**. 6, first the server apparatus (0402) waits till the condition information concerning the success/failure of the software download or the like from the terminals (0403) (step S0601). When the reception occurs, the server apparatus (0402) receives the condition information (step S0602). The server apparatus (0402) executes a predetermined statistic process in accordance with the received plurality of condition information (step S0603). More specifically, the server apparatus (0402) executes the calculation of the software download success/failure rate, the calculation of the audience rate of a specific program, and the calculation of the specific function in the terminals (0403) using rate and the connection condition rate.

The server apparatus (0402) then determines whether or not the result value of the statistic process reaches a predetermined value or a scope of the predetermined value (step S0604). When the result value of the statistic process meets the operating condition, a predetermined operation that is controlled in advance is required (step S0605), and executed (step S0606).

According to the present invention, the above-mentioned process needs not to be performed in series. For example, in some processes, the waiting till the reception of the condition information (step S0601) and the reception of the condition information in receiving (step S0602) may be performed in anytime, and the execution of a predetermined statistic process during a predetermined period (day, month, or the like) (step S0603) is performed next, and then the determination of the meeting of the condition for a predetermined operation (step S0604), the taking out of the predetermined operation (step S0605), and the execution of the predetermined operation (step S0606) are performed in necessity.

As shown in the Example 2 of the statistic processing section (0502), when the calculation of the advertising ratio or the generation of the program editing information is performed in the case where the condition information has an identifier of the program, and is viewing information indicating that the user viewed a specific program at the terminal (0403), the server apparatus (0402) waits till the viewing information concerning the viewing of the specific program from the terminals (0403) (step S0701). When the transmission occurs, the server apparatus (0402) receives the viewing information (step S0702). The server apparatus (0402) executes a predetermined statistic process the receiving plurality of the viewing information to calculate the audience rating (step S0703). The server apparatus (0402) then calculates the advertising ratings from the audience rating (step S0704), or generates program editing information (step S0705), as shown in **FIG**. 8.

The above-mentioned process needs not to be performed in series as the same process in IFG. 6. For example, in some processes, the steps of the waiting till the reception of the viewing information (step S0701) and the reception of the viewing information in receiving (step S0702), the calculation of the advertising ratings (step S0704), and generation of program editing information (step S0705), may be performed with intervals.

The above-mentioned embodiments relate to apparatuses, but the present invention may be performed in such a way wherein operations of the apparatuses mentioned in the embodiments are realized by computer programs to be recorded in the medium such as a CD-ROM or a floppy disk, or the programs may be downloaded through internet.

As described above, according to the present invention, a terminal condition control method comprising a plurality of terminals and a server apparatus controlling conditions of the terminals, and controlling conditions of the terminals, wherein the terminals are connected to the server apparatus through a communication line and transmit information indicating the conditions of the terminals, the server apparatus statistically processes the attained conditions of the terminals, the plurality of terminals have timing of informing the server apparatus of the condition determined for the respective terminals, and the timings for the respective terminals are distributed within a predetermined period. With this constitution, the present invention realizes to use the analysis results of the terminal condition information as data for making the next program or data for deciding whether or not the broadcasting of software should be continued in changing the version of software.

The download result of the broadcasting of the software of new version in modifying the version of the software can be grasped sufficiently during the condition information analysis process with use of only a part of the condition information, effective download determination can be attained without wasting the communication line fee.

**Claims**

1. A terminal condition control method comprising a plurality of terminals and a server apparatus controlling conditions of the terminals, wherein:

   the terminals are connected to the server apparatus through a communication line and transmit information indicating the conditions of the terminals,
   the server apparatus statistically processes the attained conditions of the terminals,
   the plurality of terminals have timings of informing the server apparatus of the condition determined for the respective terminals, and the timings for the respective terminals are distributed within a predetermined period.

2. The terminal condition control method according to claim 1, wherein the distribution of the condition informing timings for the plurality of terminals is set within a month by date assignment.

3. The terminal condition control method according to claim 1 or 2, wherein the distribution of the condition informing timings for the plurality of terminals can be changed.

4. The terminal condition control method according to claim 2 or 3, wherein in the distribution of the condition informing for the plurality of terminals, the date assignment is performed such that users assigned on the same date as the condition informing timings of the terminals are uniformly distributed in accordance with at least one of items including age, sex, viewing inclination, hobby, occupation, and address.

5. A server apparatus comprising:

   communication means capable of being connected with a plurality of terminals through a communication line;
   receiving means for receiving condition information from the terminals;
   terminal information analyzing means for analyzing the received condition information; and
   communication controlling means for controlling communication operation performed by the communication means,

   wherein regarding the plurality of terminals, the communication controlling means defines timings of transmitting conditions of the terminals to the server apparatus for the terminals and sets the condition informing timings to be distributed in a predetermined period of time.

**6.** A terminal comprising:

   communication means capable of being connected with a server apparatus through a communication line; and
   condition information generation means for generating condition information including downloading information of a software about the terminal;

   wherein the terminal is connected to the server apparatus by the communication line to transmit the condition information to the server apparatus, and the terminal receives instruction from the server apparatus to set its own condition information transmitting timing.

**7.** A server apparatus comprising:

   a condition information receiving section for receiving from a plurality of terminals condition information indicating conditions of the plurality of terminals each having a receiving section for receiving broadcasting; and
   a statistic processing section for statistically processing a plurality of condition information received by the condition information receiving sections.

**8.** The server apparatus according to claim 7, further comprising:

   an operation condition maintaining section for maintaining an operation condition as a condition for executing a predetermined operation;
   an operation controlling section for controlling the predetermined operation;
   a determining section for determining whether or not the result of the statistic process by the statistic processing section meets the operation condition maintained by the operation condition maintaining section; and
   an operation executing section for taking out the operation controlled by the operation condition controlling section to execute the operation when the operation condition is met in the determining section.

**9.** The server apparatus according to claim 7 or 8, wherein the condition information includes information indicating success/failure of downloading of a software from a broadcasting station to the terminals, and the statistic processing section calculates a rate of success/failure of downloading of software from the plurality of condition information received by the condition information receiving section.

**10.** The server apparatus according to one of claims 7 to 9, wherein the condition information includes information indicating success/failure of downloading of software from a broadcasting station to the terminals and information concerning attributes of the terminals, and the statistic processing section calculates a rate of success/failure of downloading of software for each of the attributes from the plurality of condition information received by the condition information receiving section.

**11.** The server apparatus according to one of claims 7 to 10, wherein the condition information includes information indicating viewing of a specific program in the terminals, and the statistic processing section calculates an audience rating of the specific program from the plurality of condition information received by the condition information receiving section.

**12.** The server apparatus according to one of claims 7 to 11, wherein the condition information includes information indicating use of a specific function in the terminals, and the statistic processing section calculates using a rate of the specific function from the plurality of condition information received by the condition information receiving section.

**13.** The server apparatus according to one of claims 7 to 12, wherein the condition information includes information indicating whether or not the terminals are being connected to the server apparatus, and the statistic processing section calculates connection condition of the terminals from the plurality of condition information received by the condition information receiving section.

**14.** The server apparatus according to one of claims 7 to 13, further comprising:

   an operation condition maintaining section for maintaining a downloading stopping condition having a predetermined rate of success/failure of downloading of software;
   an operation controlling section for controlling an operation for stopping the downloading of software;
   a determining section for determining whether or not the result of the statistic process by the statistic processing section meets the downloading stopping condition maintained by the operation condition maintaining section; and
   an operation executing section for taking out the downloading stopping operation maintained by the operation condition maintaining section to execute the operation when the downloading stopping condition is met in the determining section.

**15.** The server apparatus according to one of claims 7 to 14, further comprising an advertising rate calculating section for calculating an advertising rate of a specific program with use of the audience rating calculated by the statistic processing section as a parameter.

**16.** The server apparatus according to one of claims 7 to 15, further comprising a program editing information generating section for generating program editing information in accordance with the audience rating.

**17.** A terminal comprising a transmitting section for transmitting condition information to be statistically processed by the server apparatus according to one of claims 7 to 16.

**18.** A terminal condition control method comprising:

a condition information receiving step of receiving from a plurality of terminals condition information indicating conditions of the plurality of terminals each having a receiving section for receiving broadcasting; and
a statistic processing step of statistically processing a plurality of condition information received in the condition information receiving step.

**19.** The terminal condition control method according to claim 18, further comprising:

a determining step of determining whether or not the result of the statistic process by the statistic processing step meets an operation condition maintained in advance; and
an operation executing step of taking out the operation controlled in advance to execute the operation when determination in the determining step meets the operation condition.

[FIG. 1]

[FIG. 2]

200

display

51 52 54 1 9 10 12 11

| software storing means | software information controlling means | transmitting means | | receiving means | contents reception executing means | | contents controlling means |

53

software transmitting means

61

terminal information analyzing means

59 60

| contents storing means | contents transmitting means |

58

download results controlling means

communication means

55

62 56

| viewing history controlling means | terminal controlling means |

63

communication controlling means

500  transmitting device

contents information determining means

contents storing means

2

software information determining means

viewing history storing means

3

download determining means

results controlling means

13

5

software controlling means

7

software storing means

6

4

download executing means

condition information generating means

14

8

communication means

100  receiving means

[FIG. 3]

| date | 1 | 2 | 3 | 4 | 5 | 6 | ....... | 2 4 | 2 5 | 2 6 | ..... |
|------|---|---|---|---|---|---|---------|------|------|------|-------|
| user No. | 1 $\sim$ 100 | 101 $\sim$ 200 | 201 $\sim$ 300 | 301 $\sim$ 400 | 401 $\sim$ 500 | 501 $\sim$ 600 | ........ | 2301 $\sim$ 2400 | 2401 $\sim$ 2500 | 2501 $\sim$ 2600 | ..... |

[FIG. 4]

0 4 0 1

0 4 0 3

broadcasting station

terminal

server apparatus

terminal

0 4 0 2

0 4 0 3

terminal

terminal

0 4 0 3

[FIG. 5]

condition information

condition information
receiving section — 0 5 0 1

0 5 0 2

0 5 0 8

advertising rates
calculating section ← statistic processing
section → program editing
information generating
section

0 5 0 7

0 5 0 5

0 5 0 3

determining section ← operation condition
maintaining section

0 5 0 6

0 5 0 4

operation executing
section ← operation controlling
section

server apparatus

0 4 0 2

[FIG. 6]

```
                    ┌─────────────┐
                   (    start     )
                    └──────┬──────┘
                           │
    ┌──────────────────────┤
    │                      │
    │              ╱───────────────╲
    │             ╱  receive condition  ╲──── N ──┐
    │             ╲   information?      ╱         │
    │              ╲───────┬───────────╱          │
    │                      │                      │  S0601
    │                      │ Y                    │
    │              ┌───────┴─────────────┐        │
    │              │ receive condition    │        │
    │              │ information          │───── S0602
    │              └───────┬─────────────┘
    │                      │
    │              ┌───────┴─────────────┐
    │              │ execute statistic    │
    │              │ process of           │───── S0603
    │              │ condition information │
    │              └───────┬─────────────┘
    │                      │
    │              ╱───────────────╲
    ├─── N ───────╱  meet operation   ╲
    │             ╲   condition?       ╱───── S0604
    │              ╲───────┬──────────╱
    │                      │ Y
    │              ┌───────┴─────────────┐
    │              │ take out the         │
    │              │ operation            │───── S0605
    │              └───────┬─────────────┘
    │                      │
    │              ┌───────┴─────────────┐
    │              │ execute the          │
    │              │ operation            │───── S0606
    │              └───────┬─────────────┘
    │                      │
    └──────────────────────┘
```

[FIG. 7]

```
                    ┌─────────────┐
                    │    start    │
                    └──────┬──────┘
                           │
        ┌──────────────────┼──────────────────┐
        │                  │                  │
        │            ╱─────▼─────╲             │
        │          ╱   receive     ╲     N     │
        │        ╱    viewing        ╲─────────┘
        │        ╲   information?    ╱
        │          ╲               ╱ ──────── S 0 7 0 1
        │            ╲─────┬─────╱
        │                  │ Y
        │           ┌──────▼──────────────┐
        │           │ receive viewing     │
        │           │   information        │ ──────── S 0 7 0 2
        │           └──────┬──────────────┘
        │                  │
        │           ┌──────▼──────────────┐
        │           │ calculate audience  │
        │           │   rating            │ ──────── S 0 7 0 3
        │           └──────┬──────────────┘
        │                  │
        │           ┌──────▼──────────────┐
        │           │ calculate advertising│
        │           │   rates              │ ──────── S 0 7 0 4
        │           └──────┬──────────────┘
        └──────────────────┘
```

[FIG. 8]

[FIG. 9]

| audience rating classification | advertising rates |
|---|---|
| 0 ～ 1 0 % | 0.5 million yen |
| 1 1 ～ 2 0 % | 1 million yen |
| 2 1 ～ 3 0 % | 1.5 million and yen |
| 3 1 ～ 4 0 % | 3 million yen |
| 4 1 ～ 5 0 % | 4 million yen |
| 5 1 ～ 1 0 0 % | 5 million yen |

[FIG. 10]

| program name | c h | broadcasting time | audience rating |
|---|---|---|---|
| ○○△ | B 1 | 1 2 : 0 1 ～ 1 3 : 0 0 | 1 1 % |
| △△△ | B 1 | 1 3 : 0 1 ～ 1 4 : 0 0 | 1 2 % |
| □□□ | B 1 | 1 4 : 0 1 ～ 1 5 : 0 0 | 5 % |
| △○△ | B 2 | 1 2 : 0 1 ～ 1 3 : 0 0 | 8 % |
| □△□ | B 2 | 1 3 : 0 1 ～ 1 3 : 3 0 | 3 % |

[FIG. 11]

| T⧄CH | 12 : 01 ⎮ 13 : 00 | 13 : 01 ⎮ 14 : 00 | 14 : 01 ⎮ 15 : 00 |
|---|---|---|---|
| B 1 | 1 1 % | 1 2 % | 5 % |
| B 2 | 8 % | 3 % / 9 % | 7 % |
| B 3 | 4 % / 9 % | 2 1 % | 1 3 % |

[FIG. 12]

1 2 0 1

stop specific programs

re-consider specific functions

re-study connection condition

0 4 0 2